# EUROPÄISCHE PATENTSCHRIFT

(11) **EP 1 382 515 B1**
(45) Veröffentlichungstag und Bekanntmachung des Hinweises auf die Patenterteilung: **13.09.2006**
(21) Anmeldenummer: 03016017.0
(22) Anmeldetag: 15.07.2003
(51) Int. Cl.: B62D 25/20, B62D 21/15

(54) **Tunnelstruktur**
Transmission tunnel structure
Structure de tunnel de la transmission

(30) Priorität: 16.07.2002 DE 10232276; 21.12.2002 DE 10260393
(43) Veröffentlichungstag der Anmeldung: 21.01.2004
(73) Patentinhaber: AUDI AG, 85045 Ingolstadt (DE)
(72) Erfinder: Carle, Klaus-Dieter, 74074 Heilbronn (DE); Buttkus, Kai, 85055 Ingoldstadt (DE)
(74) Vertreter: Patzelt, Heike Anna Maria

(56) Entgegenhaltungen:
- EP-A- 0 937 630
- DE-A- 4 139 331
- DE-A- 4 323 178

## Beschreibung

Die Erfindung betrifft eine Tunnelstruktur eines Kraftfahrzeuges.

Aus dem deutschen AUDI - Patent 41 39 331 ist eine Tunnelstruktur bekannt, bei der auf zwei Abschnitte des Tunnels bildende Gußteile, die in der Mitte miteinander verbunden sind, ein Blechteil aufgesetzt ist. An die Gußteile, die gemeinsam hutartig geformt sind, schließen sich Sitzquerträger an.

Die Ausgestaltung einer Tunnelstruktur mit einem Guß- und einem Blechteil ist auch aus DE 43 23 178 A1 bekannt. In dieser Anmeldung wird von einer vollständig gegossenen Struktur ausgegangen, bei der Rippen sternförmig um Knoten angeordnet sind.

Ferner beschreibt die DE 199 42 383 A1 Kraftfahrzeugböden mit Wölbstrukturierung, bei denen die Torsionssteifigkeit durch die Strukturierung gefördert werden soll.

Der Erfindung liegt die Aufgabe zugrunde, eine Tunnelstruktur zur Verfügung zu stellen, mit der die Sicherheit der Fahrzeuginsassen bei einem Seitenaufprall weiter erhöht wird.

Die Lösung dieser Aufgabe erfolgt erfindungsgemäß mit den Merkmalen des Anspruchs 1.

Gemäß der Erfindung ist vorgesehen, daß bei einer Tunnelstruktur eines Kraftfahrzeuges, insbesondere eines Personenkraftfahrzeuges, mit einem zentralen, als Gußteil gefertigten Grundkörper und mit daran angeordneten Anbauteilen Hauptrippen vorgesehen sind, die am Gußteil angegossen sind.

Diese Hauptrippen sind quer zur Fahrzeuglängsachse angeordnet, so dass sie Kräfte eines Seitenaufpralles sicher ableiten können. Zwar ist es im Stand der Technik bekannt, zur Aussteifung von Bauteilen Rippen vorzusehen, es ist jedoch nicht bekannt, die Rippen so zu gestalten, daß sie hinsichtlich eines Seitenaufpralles optimiert sind. So haben beispielsweise sternförmige angeordnete Rippen bei gleichem Gewicht nicht die Steifigkeit zur Folge, die optimierte Hauptrippen gemäß der Erfindung aufweisen.

Es ist es auch möglich Kreuzrippen vorzusehen, diese weisen jedoch gegenüber den quer verlaufenden Hauptrippen den Nachteil auf, daß sie sich nur mit einem höheren Aufwand herstellen lassen.

Vorzugsweise überspannen die Hauptrippen im wesentlichen die gesamte Breite des Grundkörpers. Dadurch wird verhindert, daß sich der Grundkörper in seinen Randbereichen unkontrolliert verformt, sollte es zu einem Seitenaufprall kommen.

Wenn die Hauptrippen scheibenartig ausgebildet sind, wobei die Hauptrippen in Längsrichtung nicht oder nur mit einer in Längsrichtung verlaufenden Nebenrippe miteinander verbunden sind, läßt sich mit einer geringen Wandstärke eine optimale Steifigkeit erzielen. Eine geringe Wandstärke hat dabei produktionstechnisch große Vorteile, da solche Bauteile gegen Verzug weniger anfällig sind. Die Herstellung wird ferner erleichtert, wenn der Abstand der Hauptrippen von einander 10 bis 200 mm, vorzugsweise 100 mm beträgt.

Um Gewicht einzusparen ist eine Ausgestaltung vorteilhaft, bei der die Länge des Gußteiles sich nicht über die gesamte Länge der Tunnelstruktur erstreckt.

Um ein Verziehen eines Kraftfahrzeuges insgesamt zu vermeiden und damit den Insassen einen größeren Schutz zu gegeben, ist es vorteilhaft, wenn das Gußteil den Abstand zwischen zwei in Längsrichtung beabstandeten Querträgern überbrückt, die an dem Gußteil angeschlossen sind.

Bei einem Seitenaufprall besteht die Gefahr, daß sich Fahrzeugsitze aus ihren Befestigungen reißen und dadurch die Fahrzeuginsassen gefährdet werden. Um dem zu begegnen, sind im Stand der Technik aufwendige Sitzbefestigungen vorgesehen. Dieses Problem wird gemäß der Erfindung dadurch gelöst, daß bei einer Tunnelstruktur in dem Gußteil Strukturen zur Aufnahme von Fahrzeugsitzbefestigungen vorgesehen sind. Diese lassen sich mit geringerem Aufwand als herkömmliche Sitzbefestigungen herstellen und bieten zudem eine höhere Sicherheit. Dies gilt insbesondere, wenn die Strukturen in dem Gußteil ausgebildete Gewindedome sind.

Um das Gewicht des Gußteiles gering zu halten, ist gemäß einer bevorzugten Ausführungsform als Anbauteil mindestens eine quer zur Tunnelstruktur und zur Fahrzeuglängsachse verlaufende Aussteifung vorgesehen ist. Diese ermöglicht es durch eine gezielte Dimensionierung und Anordnung Kräfte eines Seitenaufpralles auch dann noch sicher zu übertragen, wenn die Hauptrippen alleine versagen würden.

Um die Fahrzeugstruktur insgesamt hinsichtlich ihres Verhaltens bei einem Seitenaufprall zu verbessern, ist als Anbauteil mindestens ein Sitzquerträger vorgesehen. Wenn die Anbauteile aus Blech gefertigt sind, lassen sich bei geringen Kosten Fahrzeugmodell-abhängig optimierte Lösungen finden, wobei ein bereits vorhandener Grundkörper (Gußteil) verwendbar ist.

Wenn die Wandung des Grundkörpers einen Getriebeblock halbschalenartig mindestens teilweise umschließt, kann verhindert werden, daß Teile des Getriebes in das Fahrzeuginnere eintreten und Fahrzeuginsassen gefährden.

Weitere vorteilhafte Ausgestaltungen und Weiterbildungen der Erfindung ergeben sich aus den Unteransprüchen sowie aus der Beschreibung im Zusammenhang mit den Zeichnungen.

Es zeigen:
- Fig. 1: eine Prinzipskizze des Bodens eines Personenkraftfahrzeuges,
- Fig. 2: ein Schnitt durch einen Kraftfahrzeugboden in vereinfachter Darstellung gemäß der Linie II - II in Fig. 6,
- Fig. 3: einen weiteren Schnitt durch den Boden eines Kraftfahrzeuges gemäß der Linie lll-lll in Fig. 6,
- Fig. 4: einen Schnitt durch den Kraftfahrzeugboden gemäß der Linie lV-lV in Fig. 1,
- Fig. 5: die Rippenstruktur einer bevorzugten Ausführungsform eines Gußteiles einer erfindungsgemäßen Tunnelstruktur, und
- Fig. 6: ein das Gußteil in Fig. 5 an der Oberseite bereichsweise abdeckendes Blechteil.

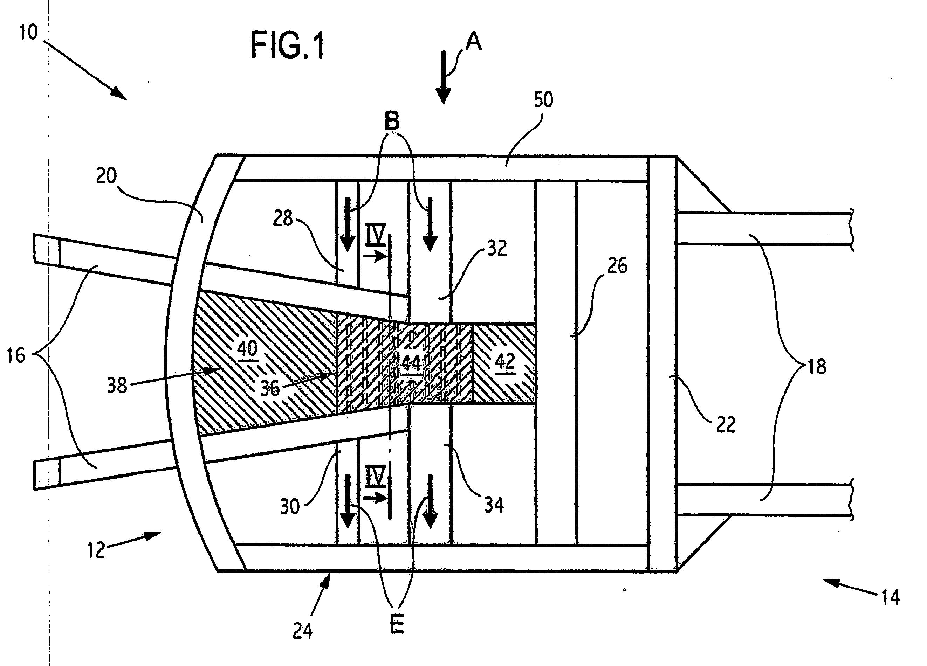

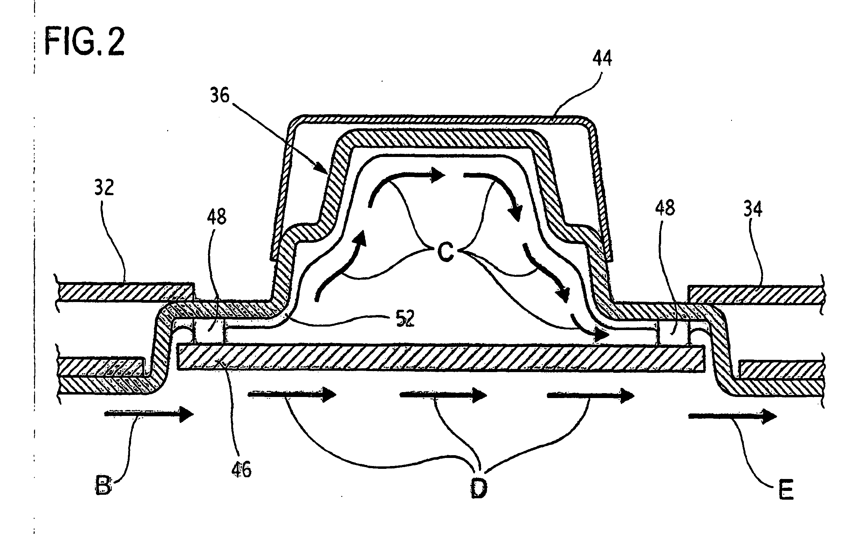

Die in Fig. 1 gezeigte prinzipielle Struktur eines Fahrzeugbodens 10 weist an der Fahrzeugvorderseite 12 sowie an der Fahrzeugrückseite 14 vordere und rückseitige Längsträger 16, 18 auf, die mit Querträgern 20, 22 einer zentralen Rahmenstruktur 24 des Kraftfahrzeuges verbunden sind. Die zentrale Rahmenstruktur 24 weist neben den Querträgern 20, 22 einen weiteren, die gesamte Fahrzeugbreite überspannenden Querträger 26 sowie vier kurze Querträger 28, 30, 32, 34 auf, die wie die vorderen Längsträger 16 als aus Blech gefertigte Anbauteile mit einem zentral angeordneten Gußteil 36 einer Tunnelstruktur 38 des Kraftfahrzeuges verbunden sind. Die Tunnelstruktur 38 weist neben dem Gußteil 36 Blechteile 40, 42, 44 (Fig. 2) sowie eine Querversteifung 46 (Fig. 2) auf.

Fig. 2 zeigt, wie die kurzen Querträger 32, 34, die auch als Sitzquerträger bezeichnet werden, als Anbauteile mit dem Gußteil 36 verbunden sind. Ferner ist aus Fig. 2 ersichtlich, wie die Querversteifung 46 das Gußteil 36 aussteift, wobei dazu die Querversteifung 46 an Schraubdomen 48 mit dem Gußteil 36 verschraubt ist.

Bei einem Seitenaufprall wird die in Figur 1 mit dem Pfeil A verdeutlichte Kraft zunächst von einem Schweller 50, der Teil der zentralen Rahmenstruktur 24, ist aufgenommen und über die Querträger 28, 32 gemäß den Pfeilen B in das Gußteil 36 eingeleitet. In dem Gußteil 36 erfolgt der Kraftfluß im wesentlichen gemäß den Pfeilen C über Hauptrippen 52 des Gußteiles 36 sowie über die Queraussteifung 46 gemäß den Pfeilen D. Von der Tunnelstruktur 38 wird dann die Kraft gemäß den Pfeilen E in die Querträger 30, 34 eingeleitet.

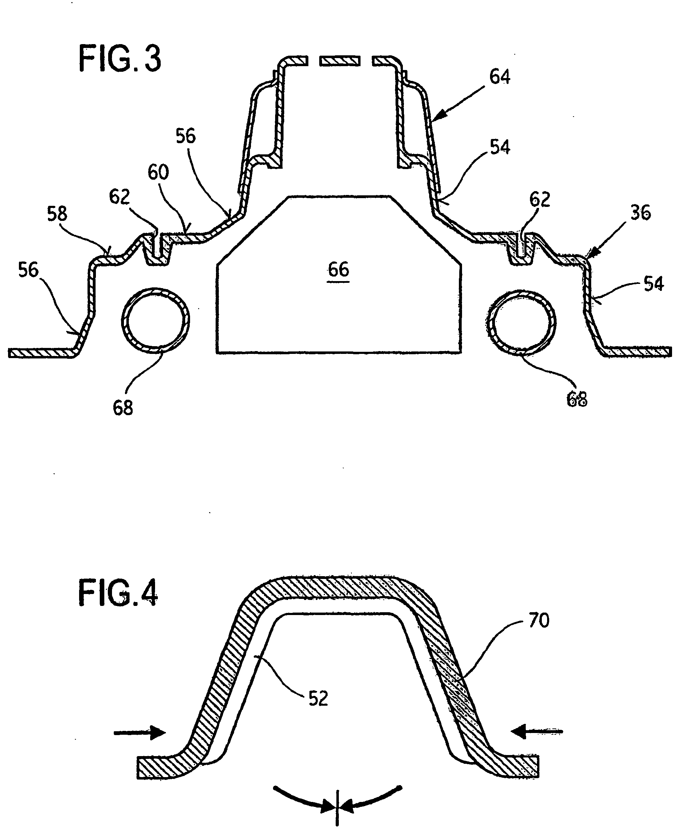

Die bereits im Zusammenhang mit Fig. 2 angesprochenen Hauptrippen 52, erlauben es, das Gußteil mit einer geringen Wandstärke von 3 bis 15 mm auszuführen, wobei die Wandstärkenverteilung variiert. Die Wandstärkenverteilung, die in Fig. 3 ersichtlich ist, zeigt, daß zur Standfläche des Kraftfahrzeuges senkrecht oder schräg verlaufende Wandabschnitte 54 bzw. 56 dünner dimensioniert sind, als im wesentlichen parallel zur Fahrzeugstandfläche liegende Wandabschnitte 58 bzw. 60.

Neben der Wandstärkenverteilung zeigt Fig. 3, daß das Gußteil 36 der Tunnelstruktur 38 Schraubdome 62 als Aufnahmen für die Sitzbefestigung aufweist. Ferner ist ein Blechteil 64 gezeigt, welches das Gußteil 36 teilweise abdeckt. Das Gußteil 36 seinerseits überdeckt halbschalenartig ein Getriebe 66 sowie Teile der Abgasanlage 68.

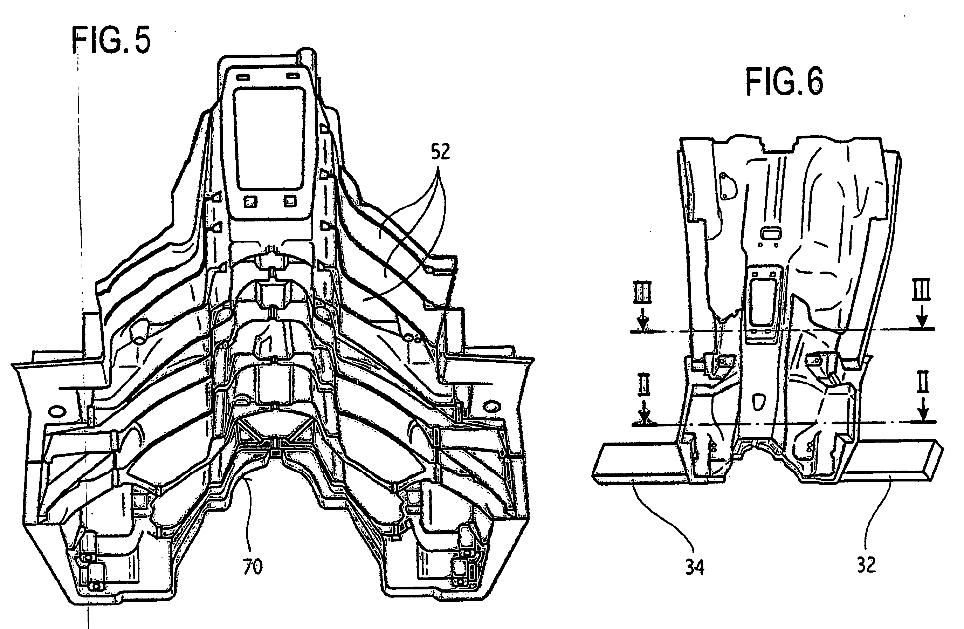

Die Hauptrippen 52 sind wie aus Fig. 5 ersichtlich scheibenartig ausgebildet und verlaufen im wesentlichen parallel zueinander in Ebenen, die sich quer zur Fahrzeuglängsrichtung und senkrecht zur Fahrzeugstandfläche erstrecken. Die Rippen sind ausschließlich über eine Mantelfläche 70 miteinander verbunden wobei die Mantelfläche 70 die zuvor beschriebene Wandstärkenverteilung aufweist.

## Patentansprüche

1. Tunnelstruktur eines Kraftfahrzeuges, mit einem zentralen, als Gußteil gefertigten Grundkörper (36) und mit daran angeordneten Anbauteilen (28, 30, 32, 24, 46, 40, 42, 44), **dadurch gekennzeichnet, dass**
- am Gußteil Hauptrippen (52) angegossen sind und
- die Hauptrippen (52) quer zur Fahrzeuglängsachse angeordnet sind.

2. Tunnelstruktur nach Anspruch 1, **dadurch gekennzeichnet, daß** die Hauptrippen (52) im wesentlichen die gesamte Breite des Grundkörpers (36) überspannen.

3. Tunnelstruktur nach einem der Ansprüche 1 bis 2, **dadurch gekennzeichnet, daß** die Hauptrippen (52) scheibenartig ausgebildet sind, wobei die Hauptrippen (52) in Längsrichtung nicht oder nur mit einer in Längsrichtung verlaufenden Nebenrippe miteinander verbunden sind.

4. Tunnelstruktur nach einem der Ansprüche 1 bis 3, **dadurch gekennzeichnet, daß** der Abstand der Hauptrippen (52) von einander 10 bis 200 mm, vorzugsweise 100 mm beträgt.

5. Tunnelstruktur nach einem der Ansprüche 1 bis 4, **dadurch gekennzeichnet, daß** die Länge des Gußteiles (36) sich nicht über die gesamte Länge der Tunnelstruktur (38) erstreckt.

6. Tunnelstruktur nach einem der Ansprüche 1 bis 5, **dadurch gekennzeichnet, daß** das Gußteil (36) den Abstand zwischen zwei Querträgern (28, 30, 32, 34) überbrückt, die an dem Gußteil (36) angeschlossen sind.

7. Tunnelstruktur insbesondere nach einem der Ansprüche 1 bis 6, **dadurch gekennzeichnet, daß** in dem Gußteil (36) Strukturen (48) zur Aufnahme von Fahrzeugsitzbefestigungen vorgesehen sind.

8. Tunnelstruktur nach einem der Ansprüche 1 bis 7, **dadurch gekennzeichnet, daß** die Strukturen (48) in dem Gußteil (36) ausgebildete Gewindedome sind.

9. Tunnelstruktur nach einem der Ansprüche 1 bis 8, **dadurch gekennzeichnet, daß** als Anbauteil mindestens eine quer zur Tunnelstruktur und Fahrzeuglängsachse verlaufende Aussteifung (46) vorgesehen ist.

10. Tunnelstruktur nach einem der Ansprüche 1 bis 9, **dadurch gekennzeichnet, daß** als Anbauteil mindestens ein Sitzquerträger (28, 30, 32, 34) vorgesehen ist.

11. Tunnelstruktur nach einem der Ansprüche 1 bis 10, **dadurch gekennzeichnet, daß** die Anbauteile (28, 30, 32, 34, 40, 42, 44, 46) aus Blech gefertigt sind.

12. Tunnelstruktur nach einem der Ansprüche 1 bis 11, **dadurch gekennzeichnet, daß** die Wandung des Grundkörpers (36) einen Getriebeblock (66) halbschalenartig mindestens teilweise umschließt.

## Claims

1. Tunnel structure of a motor vehicle, comprising a central base body (36) produced as a casting and attachments (28, 30, 32, 24, 46, 40, 42, 44) arranged thereon, **characterised in that** main ribs (52) are cast on to the casting and the main ribs (52) are arranged transversely to the longitudinal axis of the vehicle.

2. Tunnel structure according to claim 1, **characterised in that** the main ribs (52) span essentially the entire width of the base body (36).

3. Tunnel structure according to one of claims 1 to 2, **characterised in that** the main ribs (52) are disc-like, the main ribs (52) not being connected to one another in the longitudinal direction or only by means of a secondary rib extending in the longitudinal direction.

4. Tunnel structure according to one of claims 1 to 3, **characterised in that** the distance between the main ribs (52) is 10 to 200 mm, preferably 100 m.

5. Tunnel structure according to one of claims 1 to 4, **characterised in that** the length of the casting (36) does not extend beyond the entire length of the tunnel structure (38).

6. Tunnel structure according to one of claims 1 to 5, **characterised in that** the casting (36) bridges the distance between two cross members (28, 30, 32, 34) cast on to the casting (36).

7. Tunnel structure, in particular according to one of claims 1 to 6, **characterised in that** structures (48) for receiving vehicle seat brackets are provided in the casting (36).

8. Tunnel structure according to one of claims 1 to 7, **characterised in that** the structures (48) are threaded domes formed in the casting (36).

9. Tunnel structure according to one of claims 1 to 8, **characterised in that** at least one reinforcement (46) extending transversely to the tunnel structure and the longitudinal axis of the vehicle is provided as an attachment.

10. Tunnel structure according to one of claims 1 to 9, **characterised in that** at least one seat cross member (28, 30, 32, 34) is provided as an attachment.

11. Tunnel structure according to one of claims 1 to 10, **characterised in that** the attachments (28, 30, 32, 34, 40, 42, 44, 46) are made of sheet metal.

12. Tunnel structure according to one of claims 1 to 11, **characterised in that** the wall of the base body (36) at least partially encloses a gear unit (66) in the manner of a shell.

## Revendications

1. Structure de tunnel d'un véhicule automobile, comprenant un corps de base (36) central, fabriqué comme une pièce coulée et des pièces à ajouter (28, 30, 32, 24, 46, 40, 42, 44) disposées dessus, **caractérisée en ce que**
- des nervures principales (52) font corps avec la pièce coulée et
- les nervures principales (52) sont disposées transversalement à l'axe longitudinal de véhicule.

2. Structure de tunnel selon la revendication 1, **caractérisée en ce que** les nervures principales (52) recouvrent sensiblement la largeur totale du corps de base (36).

3. Structure de tunnel selon l'une quelconque des revendications 1 à 2, **caractérisée en ce que** les nervures principales (52) sont conçues en forme de disque, les nervures principales (52) dans la direction longitudinale n'étant pas reliées les unes aux autres dans la direction longitudinale ou uniquement avec une nervure secondaire s'étendant dans la direction longitudinale.

4. Structure de tunnel selon l'une quelconque des revendications 1 à 3, **caractérisée en ce que** la distance entre les nervures principales (52) s'élève de 10 à 200 mm, de préférence à 100 mm.

5. Structure de tunnel selon l'une quelconque des revendications 1 à 4, **caractérisée en ce que** la longueur de la pièce coulée (36) ne s'étend pas sur toute la longueur de la structure de tunnel (38).

6. Structure de tunnel selon l'une quelconque des revendications 1 à 5, **caractérisée en ce que** la pièce coulée (36) recouvre la distance entre deux traverses (28, 30, 32, 34), qui sont raccordées à la pièce coulée (36).

7. Structure de tunnel, en particulier selon l'une quelconque des revendications 1 à 6, **caractérisée en ce que** des structures (48) destinées à recevoir des fixations de siège de véhicule sont prévues dans la pièce coulée (36).

8. Structure de tunnel selon l'une quelconque des revendications 1 à 7, **caractérisée en ce que** les structures (48) sont des dômes filetés réalisés dans la pièce coulée (36).

9. Structure de tunnel selon l'une quelconque des revendications 1 à 8, **caractérisée en ce qu'**au moins un renfort (46) s'étendant transversalement à la structure de tunnel et à l'axe longitudinal du véhicule est prévu comme pièce à ajouter.

10. Structure de tunnel selon l'une quelconque des revendications 1 à 9, **caractérisée en ce qu'**au moins un support transversal de siège (28, 30, 32, 34) est prévu comme pièce à ajouter.

11. Structure de tunnel selon l'une quelconque des revendications 1 à 10, **caractérisée en ce que** les pièces à ajouter (28, 30, 32, 34, 40, 42, 44, 46) sont fabriquées en tôle.

12. Structure de tunnel selon l'une quelconque des revendications 1 à 11, **caractérisée en ce que** la paroi du corps de base (36) entoure en moins en partie un bloc d'engrenage (66) en formant une demi-coque.
